# EUROPEAN PATENT SPECIFICATION

(11) **EP 0 761 082 B1**
(45) Date of publication and mention of the grant of the patent: **31.10.2001**
(21) Application number: 96202173.9
(22) Date of filing: 01.08.1996
(51) Int. Cl.: A01B 69/02, A01B 61/04

(54) **A drilling machine**
Drillmaschine
Semoir

(30) Priority: 03.08.1995 NL 1000920
(43) Date of publication of application: 12.03.1997
(73) Proprietor: MAASLAND N.V., 3155 PD Maasland (NL)
(72) Inventor: Bom, Cornelis Johannes Gerardus, 3181 VC Rozenburg (NL); Brabander, Adrianus Petrus Maria, 2295 LL Kwintsheul (NL); Tollenaar, Eduard, 2905 VR Capelle a/d IJssel (NL)
(74) Representative: Corten, Maurice Jean F.M.

(56) References cited:
- EP-A- 0 155 654
- WO-A-82/02469
- DE-A- 2 414 098
- DE-A- 3 242 932
- GB-A- 1 597 358
- US-A- 3 627 057
- US-A- 4 011 914
- US-A- 4 067 394
- US-A- 4 530 405
- US-A- 4 986 367

## Description

The present invention relates to a drilling machine, as described in the preamble of claim 1.

Such a machine is known from WO 82/02469.

WO 82/02469 discloses a drilling machine in which raising of the coulters at the end of a bout causes automatic raising of the marker arms. Lowering of a marker at the beginning of a bout is controlled by an auxiliary tractor spool valve by means of which the tractor driver can select to lower either marker arm and can change this choice at any time.

The objection of the invention is to provide an improved machine of the above-mentioned type, which machine in use relieves the working load of an operator.

According to the invention this is realised by providing a drilling machine according to claim 1.

According to a particular aspect thereof the invention relates to a drilling machine, including a marker device for marking a next working run in the field to be treated, provided with a marking member, which is by means of a hydraulic ram movable in height relative to the frame of the drilling machine and comprises an arm connected therewith, wherein the arm is provided near a lateral side of the machine. Known constructions in this respect have the disadvantage that, upon meeting with large unevennesses in the field, the marker arm may break off or be dislocated. In the field there may also be stones or trees behind which the marker arm catches when the driver forgets to lift the marker. The construction according to the particular aspect prevents or at least limits damage in such cases or under such circumstances.

More in particular, the arm includes a first and a second arm portion, which second arm portion comprises a marker element near its end faced away from the machine frame, and the connection between the first and the second arm portion comprises at least two connecting elements, one of which including a pivot shaft orientated in an operative position substantially upwardly, destined for pivoting the second arm portion relative to the first arm portion and the other one destined for releasing this connection in case of overloading.

In a particular embodiment, the pivot shaft, in a plane perpendicular to the longitudinal direction of the marker arm, at least in an operative position thereof, forms at its front side an acute angle with an imaginary horizontal line extending along its lower end. A suchlike construction has the advantage that the end of the marker is guided upwards in its relative movement in relation to the first arm portion moving absolutely in the direction of travel, so that, in many cases, the marker element will be able to pass the unevenness and possible catching therebehind will be avoided.

In a further particular embodiment in accordance with the invention, the pivot shaft is supported relative to the first arm portion via a pair of lugs. This has the advantage of a solid, non-twisting support of the pivot shaft.

A further favourable construction according to the invention entails that the pivot shaft extends at least partially along a face of the first arm portion turned to the direction of travel A. In this case, the supports for the pivot shaft, constituted in the present embodiment by the pair of lugs, are positioned relative to the first arm portion in such a way that there is obtained a favourable introduction of forces acting on the pivot shaft.

In a specific embodiment, the second connecting element comprises a shear bolt; however, in an alternative embodiment, the shear bolt is replaced by a click-element, such as a spring steel bracket, or by a click-element including a ball capable of being pushed away against spring tension.

According to the invention, at least part of such problems is obviated by means of a construction as described in the characterizing part of claim 1.

For a better understanding of the present invention and to show how the same may be carried into effect, reference will now be made, by way of example, to the accompanying drawings, in which:
Figure 1 shows, in side view, a machine according to the invention, in a position in which it is connected with the lifting hitch of a tractor;
Figure 2 is an enlarged view of a detail of the machine according to the arrow II in Figure 1;
Figure 3 is a rear view of part of the machine according to the line III-III in Figure 2 and shows in dashed lines an operative position of a marker;
Figure 4 is a plan view of part of the machine according to the line IV-IV in Figure 3;
Figure 5 is a schematic view of the hydraulic control system of the marker device;
Figure 6 is a side view of an embodiment, in which the machine is connected directly with the three-point lifting hitch of a tractor, and
Figure 7 is a cross-section of an alternative embodiment of the invented security construction for a marker.

In the drawings, corresponding parts have been indicated by the same reference numerals. Furthermore, the invention is by no means restricted to the embodiments shown and described here; they only serve to illustrate the inventive idea.

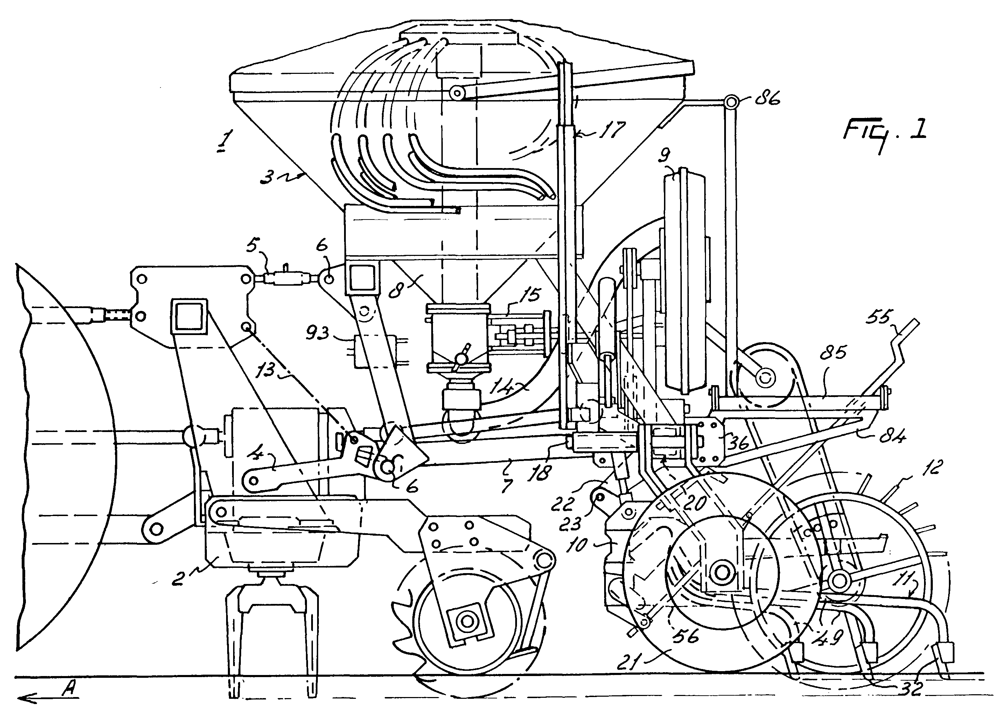

Figure 1 shows an agricultural machine 1, which is a combination of a rotary harrow 2 known per se and a drilling machine 3. At the rear side of the trestle the rotary harrow 2 is provided with coupling arms 4, 5 known per se, engaging the coupling points 6, by means of which the present drilling machine 3 might also be coupled in a customary manner with the standardized three-point lifting hitch of a tractor. The drilling machine 3 comprises a frame 7, to which the coupling points 6 are fixed and to which there are attached a hopper 8, a ventilator device 9 for the purpose of pneumatic transport of seeds, a carrier beam 10 for the drilling elements 11 and a driving wheel 12. Via a tube 14 the ventilator 9 is connected to a dosing member 15, which is fastened to the lower side of the hopper 8. In a manner known per se, the dosing member 15 is in driven connection with the driving wheel or step wheel 12. The dosing member 15 supplies seed from the hopper 8 to a mixing tube having a length of approximately one metre, which is in line with the ventilator tube 14 and extends vertically in the centre of the hopper. The dosed seed is split up in the mixing tube in the air current produced by the ventilator 9. At its upper end the mixing tube debouches into a distributing member known per se, in which the seed and air currents are distributed among flexible secondary tubes connected to the distributing member, which flexible secondary tubes lead to the drilling elements 11.

Furthermore, the drilling machine 3 is provided with a hydraulic actuator device 16 for the purpose of raising and lowering so-called markers 17, which are connected, pivotably about a shaft 18 orientated horizontally in the direction of travel A, with the drilling machine 3. A marker or marking member 17 comprises a marker arm serving as a carrier for a marker element provided near its free end. The marker element may also be constituted by the free end itself. Near its rear side the frame 7 comprises a frame beam 20 extending transversely to the direction of travel A, on which, near the transverse centre of the machine, the ventilator device 9 is mounted. In the present embodiment, having a width of approximately three metres, at the ends of this frame beam 20, there are provided wheel supports including wheels 21 for the machine. The wheel supports are pivotable through 180° about the pivot shaft 18 and adapted to be locked into a transport position. The shaft 18, more generally, the pivot axis for the marker and for the wheel coincide.

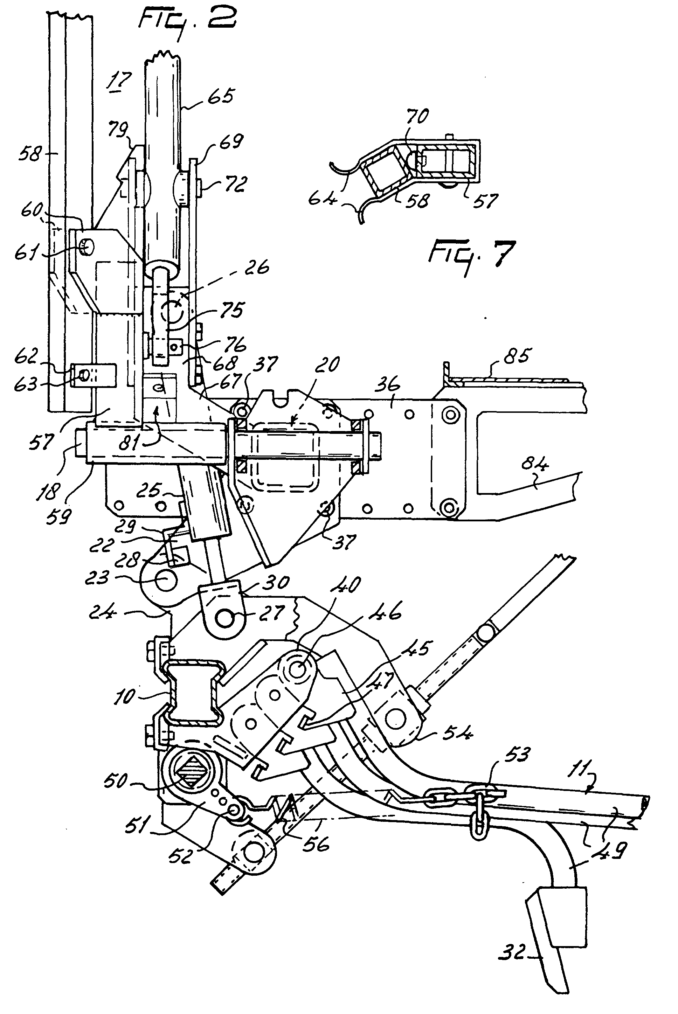

The machine 1 comprises a couple of downwardly extending supports 22, provided against the lower side of the frame beam 20 (Figure 2). Against the lower ends of the latter supports, there are provided, pivotably about a pivot shaft 23 orientated horizontally to the direction of travel A, the carrier beam 10 for the drilling elements 11, the driving wheel 12 and a non-shown coverer. In the vicinity of a support 22 for the carrier 10, the machine 1 comprises a control element 25 for putting the drilling elements 11 into operation and putting same out of operation. For that purpose the control element 25 is arranged with its ends about pivot shafts 26, respectively 27, orientated transversely to the direction of travel A, parallel to the pivot shaft 23. An upper pivot shaft 26 which, seen in side view, is disposed at least partially straight above the pivot shaft 23, is supported by a support 66, extending upwardly and rearwardly from the frame beam. At some distance from the pivot shaft 23, measured in the direction of travel A, a lower pivot shaft 27 is included in a console 24 connected with the carrier beam 10. The console 24, which is of an arch-shaped design, extends from the upper side of the carrier beam 10 at least initially upwards and rearwards. Beyond a part, located at some distance from the carrier beam 10, in which part the pivot shaft 26 is included, the console 24 further extends rearwards. Near its rearmost end, the console 24 comprises a support for an adjusting member 55. Hence, in the present embodiment, the control element 25 extends substantially vertically between the frame beam 20 and the carrier 10.

The rearmost frame beam 20 is divided into a central portion 33, constituting part of a cubical frame part of the drilling machine, and two lateral portions 34, 35, which, via coupling means, constituted in the present embodiment by reinforcement plates 36 and 38, 39, and nutted bolts 37, are detachably connected with the central portion 33. In the present embodiment, the reinforcement plates 36, 38, 39 extend vertically in the direction of travel A and are provided with fastening points in the form of boreholes which, seen in the direction of travel A, are disposed behind each other. The plates 36, 38, 39 comprise a plurality of rows of boreholes, i.e. rows of boreholes disposed at different levels of height. The reinforcement plates 36, 38, 39 are provided in the vicinity of the cubical frame, while the supports 22 and the control element 25 for the carrier 10 are connected with a lateral portion 34, 35 of the frame beam 20.

As is shown in Figure 2, in the present embodiment, the carrier 10 is constituted by a so-called profiled beam. The drilling elements 11 coupled with the carrier 10 comprise a seed tube 49 which, with its foremost end, is connected to a flexible secondary tube connected with the distributing member. In the present embodiment, against the rear end of the seed tube, there is provided a coulter or drilling shoe 32, for depositing the seed supplied into the soil. The seed tubes 49 are pivotably connected with the carrier 10 via a holder 40, which, seen in plan view, is U-shaped. By means of a single bolt/nut-connection 46, via arms 45, a seed tube 49 is pivotably connected, in two points located at some distance, with the holder 40. The arms 45 are made of plate and include at least one projection 47, bent so as to extend transversely to the direction of travel A. A projection 47 extends laterally so as to form a stop against one of the legs of the relevant holder 40. The stops 47 enable to lift the drilling coulters 32 together out of the soil.

An angular, profiled adjusting tube 50 extends under the carrier 10, parallel thereto and bearing-supported in supports connected thereto. Spring holders 51 provided with a fitting opening are pushed around the profiled tube 50. Via a coupling part 52 of a spring holder 51 there is disposed each time a tension spring 56, extending in the direction of travel A and connected with its rear end, at some distance from the arms 45 and via a chain 53, to a seed tube 49. The adjusting tube 50 comprises near its centre a support 54 extending in the initial position at least downwards and rearwards, which support 54 is pivotably connected near its end with a screw spindle 55 attached to the carrier beam 10. By means of the screw spindle 55, the spring tension under which the seed coulters 32 move through the soil during operation can centrally be adjusted.

To the end surrounding the telescopic part of the control element 25 there is attached a sensor 28, via a plate-shaped support 29, in such a way that the sensor 28 is disposed beyond the aforementioned end of the control element 25. The sensor 28 is arranged at right angles to the longitudinal direction of the control element 25 and outside the maximum circumference of the latter element relative to its longitudinal axis. The sensor 28 is disposed at such a distance from the telescopic part of the control element 25 that said telescopic part is not within the reach of the sensor 28, but the connection thereof with the machine part to be controlled is within the reach of the sensor. In the present embodiment, this to be detected connection is constituted by a fork element 30 including the pivot shaft 27, and the telescopic part is constituted by the piston rod. Each time when the sensor 28 upon detecting the fork 30 indicates that the control element 25 is withdrawn and that, consequently, all the drilling elements 11 are put out of operation, this is recorded by a counter in the electronic switch circuit pertaining to the machine. When the counter reaches an adjustable value, then, by means of the switch circuit, the seed supply to one or more drilling coulters is stopped during a working run for the purpose of creating a driving path ("tramline"). After completion of the working run in which a driving path has been created, the counter is reset to an initial value. In the embodiment shown, the sensor 28 is constituted by a so-called Namur-sensor. According to the invention, the reference-element, i.e. the fork 30, comprises an iron core. As soon as the iron core is situated in the vicinity of the Namur-sensor 28, i.e. in the vicinity of the coil provided therein, the electronic condition of the sensor 28 undergoes a change, which is passed on via an electric connection to the electronic switch circuit, and recorded by the aforementioned counter. When the sensor 28 is designed e.g. as a so-called Reed-switch, the counter operates in a similar manner.

The marker 17, shown inter alia in Figure 2, comprises an arm consisting of a first, relatively short arm portion 57 and a second arm portion 58, constituting the major part of the arm length. The marker arm is pivotable upwards and downwards about the pivot shaft 18. For that purpose a bushing 59 cooperating with the pivot shaft 18 is connected with the first arm portion 57. Near its end faced away from the bushing 59 and at its side facing the direction of travel A, the first arm portion 57 comprises a pair of lugs 60. Between the pair of lugs 60 there is passed an inner end part of the second arm portion 58. The second arm portion 58 is fixed between the lugs of the pair of lugs 60 by means of a pivot shaft 61. The second arm portion 58 is passed, relative to the direction of travel A, along a front side of the first arm portion 57. To the end part of the first arm portion 57 connected with the bushing 59 there is provided a lug 62, serving as a carrier for a shear bolt 63 passed through the inner end part of the second arm portion. In the present embodiment, the lugs of the pair of lugs 60 and the lug 62 are bent at an angle of preferably approximately 20° over a folding line extending in the longitudinal direction of the marker arm and immediately adjacent to the first arm portion 57, such that the pair of lugs 60 extends downwards in a horizontal position of the first arm portion 57, i.e. faces away from the centre of the machine in the transport position of the marker arm. The pivot shaft 61 and the shear bolt 63 extend perpendicularly to the bent lug portions, so that the latter, in an imaginary plane perpendicular to the marker arm, form an angle of 20° with a horizontal line in the direction of travel A.

In an alternative embodiment, shown in Figure 7, the machine is provided, instead of a shear bolt 63, with a break back device including a break back element 64 being under spring tension. In the present embodiment, the break back element 64 is constituted by spring steel and is bracket-shaped. The end parts of the legs of said element comprise together a narrowing of the bracket and have ends that are V-shaped relative to each other and by means of which the second arm portion 58 upon pivoting is guided in the direction of the narrowing. In the normal position, the second arm portion 58 is tightly secured between two narrowing parts of the bracket and an elastic element 70, here constituted by a rubber stop, in the basic part of the further substantially U-shaped bracket.

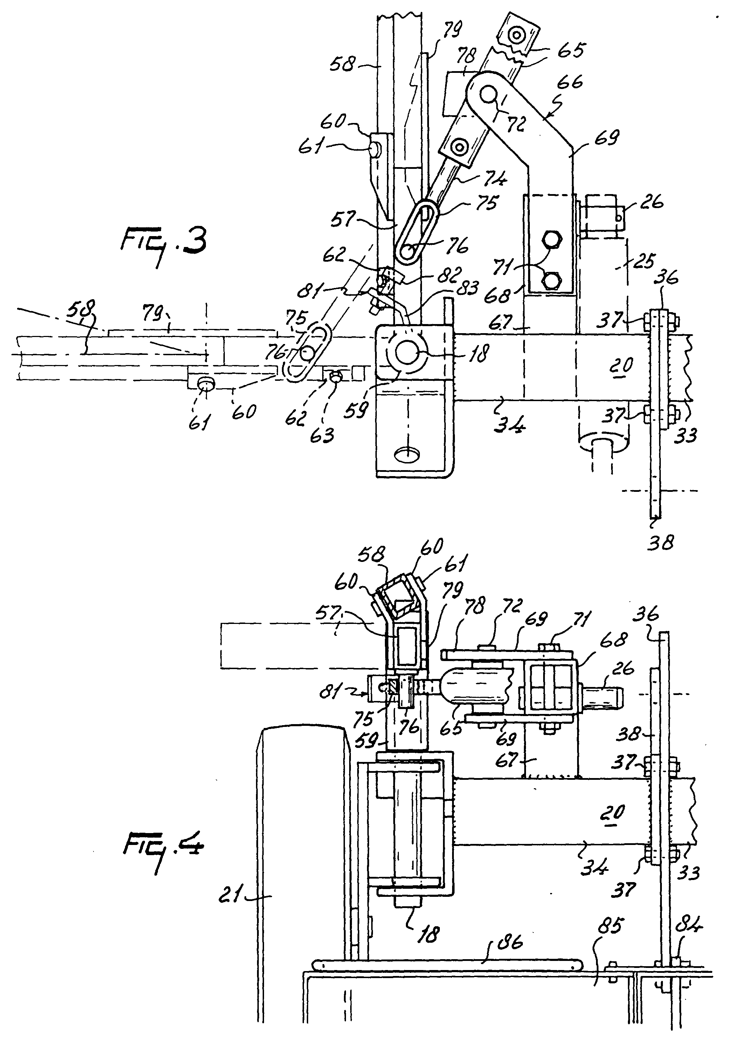

Figure 3 shows, in a rear view, part of a device for hydraulically pivoting a marker arm. The device comprises a control element 65, designed here as a hydraulic cylinder, connected with a lateral frame beam part 34 via a support 66. As is shown in the side view of Figure 2, the support 66 initially extends with a first and lower part 67 forwards and upwards from the frame beam 20. In the present embodiment, said part is fixed to the vertically extending front side of the frame beam 20, seen in plan view approximately at a distance corresponding to the thickness of the frame beam 20. The central part 68 has a length corresponding approximately to twice a vertical side of the frame beam 20 and extends at least substantially vertically. The upper pivot shaft 26 for the control element 25 is fixed to the central support part. Said pivot shaft extends beyond the inner boundary of the support 66 in the direction of the machine frame 7. A third part 69, being an upper part in the present embodiment, extends upwards and, relative to the machine frame 7, outwards in the longitudinal direction of the frame beam 20. The upper end part 69 is designed here as a pair of lugs provided against the central support part 67, in the present embodiment via bolts 71. Near the upper end of the upper support part 69, the control element 65 is provided, pivotably about a journal 72 orientated in the direction of travel A, between the parts of the pair of lugs. Via a slot hole 75 including a journal 76 movable therein, which journal extends transversely to the control element 65 and in the direction of travel A, a telescopic part 74 of the control element 65 is connected with the first arm portion 57. The upper support part 69 constitutes, together with an outwardly and horizontally extending part, a stop 78 cooperating with the first arm portion 57. For that purpose, there is provided against the first arm portion 57 a plate-shaped support part 79, constituting a kind of extension of the first arm portion 57.

At a small distance from the journal 76, near the side thereof facing the pivot shaft 18, there is also provided a stop 81 against the first arm portion 57. This stop extends relative to the longitudinal direction of the marker arm at an angle of ± 60°, at least more than 45°, in particular at the side of the marker arm faced away from the control element 65. The magnitude of the angle is anyhow such that the stop 81 in its inoperative position, shown in Figure 3, comprises a plane extending transversely to the longitudinal direction of the control element 65. In the embodiment shown, this plane is constituted by the head of a bolt 82 fixed via locknuts, so that the machine comprises an adjustable stop 81 and a precise adjustment of the stop face relative to the control element 65 is possible.

In the present embodiment, the stop 81 constitutes part of a stiffening plate 83, provided between the bushing 59 and the first arm portion 57. A part of this stiffening plate 83, located near the journal 76, constitutes the stop 81 and is bent for that purpose in the described manner.

Figure 2 furthermore shows an operator platform 85 fitted via brackets 84 to the reinforcement plates 36 of the central portion 33 of the frame beam 20. This operator platform extends at least at one lateral side of the machine beyond the reinforcement plates 36 until near the pivot shaft 18. Hereby the operator platform extends parallel to the rearmost edge of the hopper 8. In the present embodiment, the operator platform 85, seen in rear view, extends laterally until approximately a quarter of the width of the hopper 8 beyond the transverse centre thereof. The operator platform is provided with a railing 86. In the present embodiment, the screw spindle 55 is of such a length that its handle is located nearer to the rearmost boundary of the floor of the operator platform 85 than to the adjusting tube 50. The screw spindle is passed through a bushing connected with the operator platform and is included therein so as to be able to reciprocate. There is included a universal joint in the rod of the screw spindle 55 between the bushing and the support 54. A ball joint may be used as an alternative. The bushing of the screw spindle 55 constitutes a support provided near the handle of the screw spindle and is pivotably mounted about a shaft that is orientated horizontally and transversely to the direction of travel A.

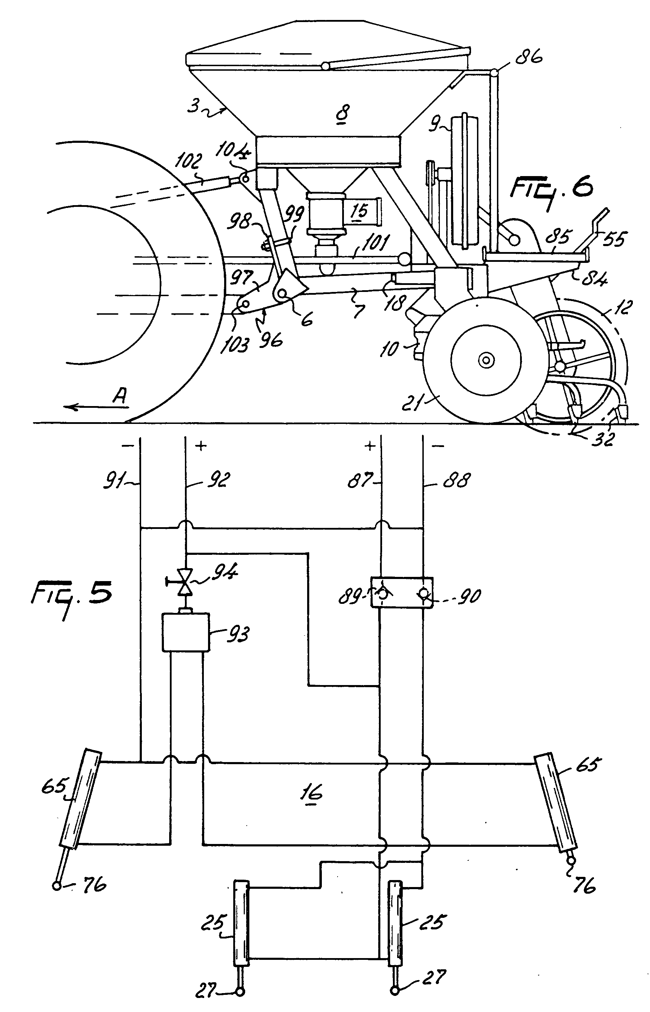

Figure 5 is a schematic view of the hydraulic control device of the machine. Said device comprises supply and discharge lines 87 and 88 capable of being connected to the hydraulics of a tractor. The supply and discharge line 87 includes a nonreturn valve 89, arranged so as to counteract a flow back of oil to the tractor. The supply and discharge line 88 includes a nonreturn valve 90, disposed so as to counteract a passage of oil from the tractor. The supply and discharge line 87 includes a branching towards two hydraulic control elements 25 and is connected to the chamber into which extends the plunger rod thereof. Via a branching the supply and discharge line 88 is connected to the cylinder chamber adjacent to the closed end of the hydraulic cylinder 25. Between its end for connection to the tractor hydraulics and the nonreturn valve 90, the supply and discharge line 88 comprises a branching towards a third supply and discharge line 91 which, in a coupled position of the machine, is connected on the one hand with an end to the tractor hydraulics and, on the other hand, is connected via a branching to the cylinder chamber of the control elements 65, designed as hydraulic cylinders, which cylinder chamber is adjacent to the closed end of the cylinder. At the side of the nonreturn valve 89 faced away from the tractor hydraulics, the supply and discharge line 87 comprises a branching towards a fourth supply and discharge line 92. The fourth supply and discharge line 92 is on the one hand connectable to the tractor hydraulics and on the other hand, by means of a branching in a hydraulic actuator block 93, to the chamber of the hydraulic cylinders 65 comprising the piston rod thereof. Between the connection of the supply and discharge line 87 and the hydraulic actuator block 93, there is included in the supply and discharge line 92 a controllable valve 94 constituted by a ball cock. In the direction of the hydraulic cylinders 65, the hydraulic actuator block 93 is open for passage to both branchings of the fourth supply and discharge line 92. In the direction from the hydraulic cylinders 65, the actuator block 93 is alternately open for one of the two branchings. This alternation is each time realized by a starting flow in the direction of the cylinders 65.

In the transport position and the inoperative position of the machine all the control elements 25, 65 are in their withdrawn position. Telescopic extension of the cylinders 25 as a result of operating the tractor hydraulics by the driver is accompanied by oil supply via the supply and discharge line 87. By means of the branching to the supply and discharge line 91 the cylinders 65 are also brought under pressure. For one of them a flow-back of oil is blocked by means of the hydraulic actuator block 93. Consequently, the pressure applied on this cylinder has no effect and extension thereof will not be realized. For the cylinder 65, which does extend, discharge of oil is possible via the connection between the supply and discharge lines 91 and 88. The supply and discharge line 88 is, as a data of the tractor hydraulics, open for a flow-back of oil to the tractor when the supply and discharge line 87 by means of the tractor hydraulics serves as a supply line. Conversely, also as a data of the tractor hydraulics, the supply and discharge line 87 is open for discharge when the supply and discharge line 88 is used by the tractor hydraulics as a supply line. During normal use of the machine, the third and fourth supply and discharge lines 91 and 92 are closed off for oil supply to the tractor by means of the tractor hydraulics. Analogously to the pair of lines 87, 88, the pair of lines 91 and 92 is connected to lines of the tractor hydraulics and serve mutually alternately as supply and discharge lines. Operating the hydraulic device 16 via the supply and discharge line 92 results in that a marker 17, independently of the cylinders 25 for the drilling elements 11, can be put into operation and out of operation, e.g. on the border of the parcel or upon passing a tree or other obstacle in the field.

The function of the construction will be explained in what follows.

Figures 1 to 3 show a construction in which the carrier 10, together with the outer frame portions 34 and 35, is fixable either in a rather forward or in a rather rearward position relative to the central frame portion 33 of the machine. This has the advantage that the carrier 10, the outer portions 34, 35 of the frame beam 20 and the supporting wheels 21 coupled therewith can be included as close to the tractor as is allowed by the size and/or the place of the roller of a soil cultivating machine 2 possibly coupled between the drilling machine 3 and the tractor. It is noted that the cubical skeletton 7, constituting the frame of the drilling machine, is located at such a height that it extends usually above a packer roller often applied behind soil cultivating machines 2. The supporting wheels 21 and the outer frame beam portions 34, 35 are connected with the central frame beam portion 33 in such a way that the imaginary foremost vertical tangent line of a wheel extends behind the most forwardly projecting part of the carrier 10 or the adjusting tube 50. From the carriers 10, holders 40 for the seed tubes 49 including drilling coulters 32 extend rearwards, also for the purpose of displacing the centre of gravity of the machine as forwardly as possible.

During operation, the machine is supported, near its front side, in coupling arms 5, 4 of either a tractor or an intermediary soil cultivating machine 2, and, near its rear side, by the supporting wheels 21. Via the wheels 21 and the way of coupling, the machine is allowed to follow freely possible inclinations in the field. For that purpose it is advantageous that the wheels 21 are situated in the vicinity of the drilling coulters 32, so that the spring tension, whereunder said coulters are inserted in the soil during operation, fluctuates as little as possible. This spring tension can be increased or reduced centrally, i.e. by means of the single screw spindle 55, according to the resistance of the soil type. Upon turning at the head of the field, the coulters 32 can be put out of operation together with the step wheel 12, i.e. by activating a control member 25. After activating the control member 25, which means, in the present embodiment, that the piston rod is withdrawn, the whole constituted by the carrier 10, the adjusting tube 50 and the parts connected therewith, such as the step wheel 12, the drilling coulters 32 and the adjusting element 55, pivot upwards and forwards about the pivot shafts 23. This prevents e.g. the seed tubes 49 from getting twisted during turning at the head of the field. In case that the drilling machine 3 via an intermediary soil cultivating machine 2 is coupled with the tractor, the machine combination 1, as is shown by a dashed/dotted line in Figure 1, comprises chains 13 extending between the lower coupling arms 4 and the upper side of the coupling trestle of the intermediary machine 2. The length of the chains 13 limits the downward deflection capacity of the drilling machine 3 relative to the intermediary soil cultivating machine 2, during transport as well as during operation. The length of the chains is simply adjustable, which is practical e.g. upon changing from the transport position to the operative position.

On the basis of the number of signals supplied by the sensor 28 and established in the electronic switch circuit, i.e. the number of times that a marker is lifted out of work, a driving path is laid in the seed bed. For that purpose the seed supply to one or more drilling elements is blocked automatically. The period in which a driving path or tramline has to be laid, i.e. the number of working runs after which this should be done, is adjustable.

Figure 6 shows the drilling machine in accordance with the invention in a position in which it is coupled with the three-point lifting hitch of a tractor. Against the frame parts of the machine that are located near the lower coupling points 6, in the present embodiment against two substantially vertically and upwardly extending stands of the frame, there is provided a pair of detachable coupling elements 96. Each of both coupling elements 96 is connected with a substantially upwardly extending stand via a bracked-shaped fastening element 99 and the relevant coupling element 6 fixed in the machine. The bracket 99 engages with an abutment plate 98, leaning against the stand, against which abutment plate there is provided a substantially forwardly extending pair of lugs 97. The pair of lugs 97 comprises a lower coupling point 103 that is located more forwardly relative to the fixed coupling point 6. The top rod 102, although in a somewhat further screwed out position, is included in the fixed upper coupling point of the machine in a normal manner via a fastening pin 104. The drive of the machine is effected via a long telescopic universal joint shaft 101, supplied together with the machine, which shaft is on the one hand connected to the driving power take-off shaft of the tractor and on the other hand to a drivable journal of the machine.

The effect of the mountable coupling elements 96 is that the drilling machine, in particular the hopper 8 thereof, cannot cause a risk of damage of the tractor cabin when the drilling machine is used directly in the three-point lifting hitch, and that the centre of gravity of the machine can be maintained to a sufficient extent near the tractor when the drilling machine constitutes part of a machine combination, whereby e.g. a rotary harrow is linked between the tractor and the drilling machine. The design of the coupling elements 96 is particularly advantageous. The coupling elements have the additional advantage that they can be included in the machine by one person in a simple manner and without the risk of overloading for the user. In a specific embodiment according to the invention, each of the coupling elements is capable of pivoting away after having been released and hence permanently included in the machine. In a favourable embodiment, a suchlike coupling element comprises a hook-shaped pair of lugs which is pivotably provided in the bend of the hook about a pivot shaft, passed horizontally and transversely to the direction of travel, which is preferably provided in a stand of the frame and just above the fixed lower coupling point 6. In an operative position, such a pair of lugs, after pivoting through approximately 90° relative to the frame, is fixed by means of a locking pin passed through the one square end of the lugs and the relevant stand at a higher situated level than the pivot shaft. In an inoperative position, such a pair of lugs is pivoted clockwise rearwards and the pair of lugs is locked, in its inoperative position, relative to the relevant stand, while a locking pin is passed through the opening for the lower coupling point 103 and through the stand.

## Claims

1. A drilling machine provided with coulters (32) for depositing seed into the earth, the coulters being commonly provided movably into and out of a working position by means of at least one hydraulic coulter ram (25), the machine further being provided with a marking member (17) at both lateral sides of the machine, each marking member (17) being provided movably by means of a hydraulic marker ram (65) into and out of a working position wherein the marking member (17) touches the soil, the machine further being provided with hydraulic means (87 - 94) to activate the hydraulic marker rams (65) for moving the relevant marking member (17) out of its working position when the hydraulic coulter ram (5) is activated for moving the coulters (32) out of their working position, the hydraulic means comprising a hydraulic actuator block (93) for alternately allowing each marker ram (65) to be activated for moving the relevant marking member (17) into and out of its working position, and the hydraulic actuator block (93), in the direction away from the marker rams (65), being connected to one single hydraulic supply and discharge line (92), **characterized in that** the hydraulic means (87-94) are adapted to activate the hydraulic marker rams (65) for moving the relevant marking member (17) into its working position when the hydraulic coulter ram (25) is activated for moving the coulter into their working position, and **in that** the single supply and discharge line (92) of the actuator block (93) is provided with a controllable ball cock valve (94).

2. A drilling machine as claimed in claim 1, **characterized in that** hydraulic means (87 - 90) are provided for realizing that a hydraulic ram (65) for a marker (17) is operable independently of the hydraulic ram (25) for the coulters.

3. A drilling machine as claimed in claim 1 or 2, **characterized in that** activation of the hydraulic ram (25) for the coulters (32) leads to a movement into or out of their working position relative to the machine frame.

4. A drilling machine as claimed in any one of the preceding claims, **characterized in that** the hydraulic ram (25) for the coulters (32) is provided with a sensor (28) for sensing the position in or out of work of the coulters (32).

5. A drilling machine as claimed in any one of the preceding claims, **characterized in that** electronic means are provided for counting the number of times the coulters (32) have been put into or out of a working position by means of the signal provided by the sensor (28).

6. A drilling machine according to one of the preceding claims, including a marker device for marking a next working run in the field to be treated, provided with a marking member (17), which is by means of a hydraulic ram movable in height relative to the frame of the drilling machine and comprises an arm connected therewith, **characterized in that** the arm is provided near a lateral side of the machine.

7. A drilling machine as claimed in claim 1, **characterized in that** the arm includes a first (57) and a second arm portion (58), which second arm portion (58) comprises a marker element near its end faced away from the machine frame (7), and the connection between the first (57) and the second arm portion (58) comprises at least two connecting elements, one of which (60, 61) including a pivot shaft (61) orientated in an operative position substantially upwardly, destined for pivoting the second arm portion (58) relative to the first arm portion (57) and the other one (62, 63; 64, 70) destined for releasing this connection in case of overloading.

8. A drilling machine as claimed in claim 7, **characterized in that** the pivot shaft (61), in a plane perpendicular to the longitudinal direction of the marker arm, at least in an operative position thereof, forms at its front side an acute angle with an imaginary horizontal line extending along its lower end.

9. A drilling machine as claimed in any one of the preceding claims, **characterized in that** a marking member (17) comprises a stop (81) for abutment of a control element such as a hydraulic ram (65) for the purpose of moving the marking member (17) from a position out of work into a working position, provided in such a way that, in the transport position of the marking member, a stop face is orientated substantially transversely to the direction of travel of the relevant control element (65) and which stop face, in an operative position of the marking member (17), comprises a direction component in the direction of travel of the control element (65), such that the abutting part of the control element may pass along said stop in the operative position of the marking member (17).

## Patentansprüche

1. Drillmaschine mit Scharen (32) zum Einbringen von Saatgut in die Erde, wobei die Schare mit Hilfe von mindestens einem hydraulischen Scharzylinder (25) gemeinsam in eine Arbeitslage einstellbar und aus ihr herausbewegbar sind, wobei die Maschine ferner auf beiden Längsseiten der Maschine mit einem Spurreißer (17) versehen ist, wobei jeder Spurreißer (17) mit Hilfe eines hydraulischen Spurreißerzylinders (65) in eine Arbeitslage, in der der Spurreißer (17) den Boden berührt, einstellbar und aus ihr herausbewegbar ist, wobei die Maschine ferner mit Hydraulikvorrichtungen (87 bis 94) versehen ist, um die hydraulischen Spurreißerzylinder (65) zu betätigen und den jeweiligen Spurreißer (17) aus seiner Arbeitslage herauszubewegen, wenn der hydraulische Scharzylinder (5) betätigt wird, um die Schare (32) aus ihrer Arbeitslage herauszubewegen, wobei die Hydraulikvorrichtungen einen hydraulischen Stellblock (93) umfassen, um abwechselnd jeden Spurreißerzylinder (65) aktivieren und den jeweiligen Spurreißer (17) in seine Arbeitslage einstellen und aus ihr herausbewegen zu können, und wobei der hydraulische Stellblock (93) in der von den Spurreißerzylindern (65) abgewandten Richtung mit einer einzigen hydraulischen Zuführ- und Abflußleitung (92) verbunden ist,
**dadurch gekennzeichnet, daß** die Hydraulikvorrichtungen (87 bis 94) geeignet sind, die hydraulischen Spurreißerzylinder (65) zu aktivieren, um den jeweiligen Spurreißer (17) in seine Arbeitslage zu bewegen, wenn der hydraulische Scharzylinder (25) aktiviert wird, um das Schar in seine Arbeitslage zu bewegen, und daß die einzige Zuführ- und Abflußleitung (92) des Stellblockes (93) mit einem steuerbaren Schwimmerventil (94) versehen ist.

2. Drillmaschine nach Anspruch 1,
**dadurch gekennzeichnet, daß** Hydraulikvorrichtungen (87 bis 90) vorhanden sind, die dafür sorgen, daß ein Hydraulikzylinder (65) für einen Spurreißer (17) unabhängig von dem Hydraulikzylinder (25) für die Schare betätigbar ist.

3. Drillmaschine nach Anspruch 1 oder 2,
**dadurch gekennzeichnet, daß** die Betätigung des Hydraulikzylinders (25) für die Schare (32) zur Folge hat, daß sich diese in ihre Arbeitslage relativ zu dem Maschinenrahmen oder aus ihr herausbewegen.

4. Drillmaschine nach einem der vorhergehenden Ansprüche,
**dadurch gekennzeichnet, daß** der Hydraulikzylinder (25) für die Schare (32) mit einem Sensor (28) zur Ermittlung der Arbeitslage oder der Ruhelage der Schare (32) versehen ist.

5. Drillmaschine nach einem der vorhergehenden Ansprüche,
**dadurch gekennzeichnet, daß** elektronische Vorrichtungen vorhanden sind, um mit Hilfe des von dem Sensor (28) gelieferten Signals zu zählen, wievielmal die Schare (32) in eine Arbeitslage eingestellt oder aus ihr herausbewegt wurden.

6. Drillmaschine nach einem der vorhergehenden Ansprüche mit einer Spurreißervorrichtung zum Markieren eines anschließenden Arbeitsganges auf dem zu bearbeitenden Feld, die mit einem Spurreißer (17) versehen ist, der mittels eines Hydraulikzylinders relativ zu dem Rahmen der Drillmaschine höhenbewegbar ist und einen mit dem Rahmen verbundenen Arm umfaßt,
**dadurch gekennzeichnet, daß** der Arm nahe einer Längsseite der Maschine angeordnet ist.

7. Drillmaschine nach Anspruch 1,
**dadurch gekennzeichnet, daß** der Arm einen ersten Armteil (57) und einen zweiten Armteil (58) aufweist, wobei der zweite Armteil (58) nahe seinem von dem Maschinenrahmen (7) abgewandten Ende ein Spurreißerelement aufweist und die Verbindung zwischen dem ersten Armteil (57) und dem zweiten Armteil (58) mindestens zwei Verbindungselemente umfaßt, wobei das eine Verbindungselement (60, 61) eine Schwenkachse (61) enthält, die in einer Arbeitslage im wesentlichen aufwärts gerichtet ist und dazu dient, den zweiten Armteil (58) relativ zu dem ersten Armteil (57) zu verschwenken, und wobei das andere Verbindungselement (62, 63; 64, 70) dazu dient, diese Verbindung im Falle einer Überlastung zu lösen.

8. Drillmaschine nach Anspruch 7,
**dadurch gekennzeichnet, daß** die Schwenkachse (61) in einer senkrecht zur Längserstreckung des Spurreißerarmes verlaufenden Richtung zumindest in einer Arbeitslage desselben an ihrem vorderen Ende einen spitzen Winkel mit einer gedachten Horizontalen bildet, die sich entlang dem unteren Ende der Schwenkachse erstreckt.

9. Drillmaschine nach einem der vorhergehenden Ansprüche,
**dadurch gekennzeichnet, daß** ein Spurreißer (17) einen Anschlag (81) umfaßt zur Anlage eines Steuerelementes, wie z. B. eines Hydraulikzylinders (65) zum Bewegen des Spurreißers (17) aus einer Ruhelage in eine Arbeitslage, wobei der Anschlag derart angeordnet ist, daß eine Anschlagfläche in der Transportlage des Spurreißers im wesentlichen quer zur Bewegungsrichtung des betreffenden Steuerelementes (65) ausgerichtet ist, und wobei die Anschlagfläche in einer Arbeitslage des Spurreißers (17) eine sich in Bewegungsrichtung des Steuerelementes (65) erstreckende Richtungskomponente aufweist, so daß der anliegende Teil des Steuerelementes in der Arbeitslage des Spurreißers (17) an dem Anschlag entlanggleiten kann.

## Revendications

1. Semoir muni de coutres (32) destiné à déposer une semence dans la terre, les coutres étant, de manière courante, agencés de manière mobile dans une position active, et à l'extérieur de celle-ci, par l'intermédiaire d'au moins un piston de coutre hydraulique (25), la machine étant en outre munie d'un élément de marquage (17) au niveau des deux côtés latéraux de la machine, chaque élément de marquage (17) étant agencé de manière mobile par l'intermédiaire d'un piston de marqueur hydraulique (65) dans une position active, et à l'extérieur de celle-ci, où l'élément de marquage (17) touche le sol, la machine étant en outre munie de moyens hydrauliques (87 à 94) destinés à actionner les pistons de marqueur hydrauliques (65) pour déplacer l'élément de marquage concerné (17) à l'extérieur de sa position active lorsque le piston de coutre hydraulique (5) est actionné pour déplacer les coutres (32) à l'extérieur de leur position active, les moyens hydrauliques comportant un bloc actionneur hydraulique (93) pour permettre de manière alternée à chaque piston de marqueur (65) d'être actionné pour déplacer l'élément de marquage concerné (17) dans sa position active et à l'extérieur de celle-ci, et le bloc actionneur hydraulique (93), dans la direction s'éloignant des pistons de marqueur (65), étant connecté à une ligne d'alimentation et d'évacuation hydraulique unique (92), **caractérisé en ce que** les moyens hydrauliques (87 à 94) sont adaptés pour actionner les pistons de marqueur hydraulique (65), pour déplacer l'élément de marquage concerné (17) dans sa position active lorsque le piston de coutre hydraulique (25) est actionné pour déplacer le coutre dans sa position active, et **en ce que** la ligne d'alimentation et d'évacuation unique (92) du bloc actionneur (93) est munie d'une vanne formant robinet à flotteur pouvant être commandée (94).

2. Semoir selon la revendication 1, **caractérisé en ce que** des moyens hydrauliques (87 à 90) sont fournis pour obtenir qu'un piston hydraulique (65) destiné au marqueur (17) puisse être actionné de manière indépendante du piston hydraulique (25) destiné aux coutres.

3. Semoir selon la revendication 1 ou 2, **caractérisé en ce que** l'actionnement du piston hydraulique (25) destiné aux coutres (32) provoque un déplacement dans leur position active, et à l'extérieur de celle-ci, par rapport au châssis de machine.

4. Semoir selon l'une quelconque des revendications précédentes, **caractérisé en ce que** le piston hydraulique (25) destiné aux coutres (32) est muni d'un capteur (28) destiné à détecter la position active ou inactive des coutres (32).

5. Semoir selon l'une quelconque des revendications précédentes, **caractérisé en ce que** des moyens électroniques sont agencés pour compter le nombre de fois où les coutres (32) ont été mis dans une position active ou à l'extérieur de celle-ci par l'intermédiaire du signal délivré par le capteur (28).

6. Semoir selon l'une quelconque des revendications précédentes, incluant un dispositif formant marqueur destiné à marquer un trajet actif suivant dans le champ à traiter, muni d'un élément de marquage (17), qui est mobile en hauteur par rapport au châssis du semoir par l'intermédiaire d'un piston hydraulique, et qui comporte un bras connecté à celui-ci, **caractérisé en ce que** le bras est agencé à proximité d'un côté latéral de la machine.

7. Semoir selon la revendication 1, **caractérisé en ce que** le bras comporte une première (57) et une seconde partie de bras (58), seconde partie de bras (58) qui comporte un élément de marquage à proximité de son extrémité dirigée de manière éloignée du châssis de machine (7), et la connexion entre la première (57) et la seconde partie de bras (58) comporte au moins deux éléments de connexion, dont l'un (60, 61) inclut un arbre de pivotement (61) orienté dans une position active sensiblement vers le haut, destiné à faire pivoter la seconde partie de bras (58) par rapport à la première partie de bras (57), et l'autre (62, 63 ; 64, 70) étant destiné à libérer cette connexion dans le cas d'une surcharge.

8. Semoir selon la revendication 7, **caractérisé en ce que** l'arbre de pivotement (61), dans un plan perpendiculaire à la direction longitudinale du bras de marqueur, au moins dans une position inactive de celui-ci, forme au niveau de son côté avant un angle aigu avec une ligne horizontale imaginaire s'étendant le long de son extrémité inférieure.

9. Semoir selon l'une quelconque des revendications précédentes, **caractérisé en ce qu'**un élément de marquage (17) comporte une butée (81) pour la butée d'un élément de commande tel qu'un piston hydraulique (65) dans le but de déplacer l'élément de marquage (17) d'une position hors fonctionnement en une position active, agencée d'une manière telle que, dans la position de transport de l'élément de marquage, une face de butée est orientée sensiblement transversalement à la direction de déplacement de l'élément de commande concerné (65), et face de butée qui, dans une position active de l'élément de marquage (17), comporte une composante de direction dans la direction de déplacement de l'élément de commande (65), de telle sorte que la partie en butée de l'élément de commande peut passer le long de ladite butée dans la position active de l'élément de marquage (17).
